# EUROPEAN PATENT SPECIFICATION

(11) **EP 1 245 893 B1**
(45) Date of publication and mention of the grant of the patent: **15.09.2004**
(21) Application number: 01500199.3
(22) Date of filing: 25.07.2001
(51) Int. Cl.: F16L 33/207, F16L 13/14

(54) **Pipe connection device**
Rohrverbindungsvorrichtung
Dispositif de raccordement de tuyaux

(30) Priority: 27.03.2001 ES 200100708
(43) Date of publication of application: 02.10.2002
(73) Proprietor: SANEPER, S.A., 01170 Legutiano (Araba) (ES)
(72) Inventor: Diaz Moreno, Jesus, 48100 Laukariz (ES); Gonzalez Dominguez, Agustin, 01007 Vitoria (ES)
(74) Representative: Urteaga Simarro, José Antonio

(56) References cited:
- DE-A- 19 856 999
- DE-C- 19 929 010
- US-A- 1 825 005

## Description

This invention relates to a system for joining, connecting or coupling pipes, in particular multi-layer plastic pipes with an aluminium core and/or thermoplastic pipes of cross-linked polyethylene (more commonly known as PEX) and polybutylene (PB).

For joining this type of units, stainless steel bushings are normally used, arranged on nipples or teats which will be clamped by the pipe to be connected to the said nipple. Once the pipe is lodged as far as the base of the nipple, usually with the interposition of a seal or gasket over the said base, a radial type press, which consists of a crimper with three rings or crimping bands that put pressure on the stainless steel bushing, is situated over the bushing in order to fix the piping.

Before the crimping operation can be carried out, the assembly process requires a prior calibration of the pipe that allows its inner diameter to be expanded slightly, as well as removing the oval that might have been caused on being cut, thus facilitating the insertion of the body of the nipple (as a result of the pipe being more concentric and having a slightly larger diameter). In order to facilitate this insertion, the pipe calibration tool will also have made a small bevel or countersinking at its end, so that the sliding of the nipple into the pipe is favoured by its being tapered with a shape designed for this purpose.

The known technique therefore uses, as its basic items, the bushing, the lodging joint and the nipple, connected to each other by the crimper or press in question.

The surface shapes of the nipples used in these known systems usually have several profiles, e.g. saw tooth, slots or necks with thermoplastic rubber gaskets or seals (EPDM, etc.) so that the thermoplastic pipe slides very tightly over the said nipple, which on occasions means that the friction causes the joints to split, with the consequent problem of water leaks.

The plastic gaskets themselves are subjected to being shifted when not required to do so.

In the case of plastic gaskets, problems of breakage occur with a certain frequency, arising from the manual turning applied on the fitting, once it has been assembled and crimped, in order to locate it in its final position.

Problems often appear for adaptation of conventional assemblies to other thermoplastic pipes, such as PEX (chemically cross-linked polyethylene) and PB (polybutylene), for example.

One example of the current systems where a plastic gasket is used to interface between the nipple and the bushing is that of patent DE 19929010.

The object of the invention is to provide a system for connecting pipes that eliminates these classical disadvantages in traditional assemblies, by providing a specific nipple that takes advantage of the configuration of the conventional crimper or press.

Another object of the invention is to provide a system for connecting pipes that is simple and economical to manufacture.

In order to put these objectives into practice, the invention claims a pipe connection system according to claim 1.

A central area of the nipple is equipped with three annular ridges or ribs with a semicircular cross section, that form part of the nipple itself and protrude equally from it. Between these ledges and the base of the nipple there is a cavity and at the very start of the nipple there is an annular slot into which the internal end of a sealing gasket and housing enters, which in turn is supported on the base of the nipple until it protrudes to the exterior at a beaded area that houses an inner end of the stainless steel bushing prepared for this purpose.

Between two of the mentioned annular ridges on the nipple, another ridge is situated, also annular and smaller in diameter than the others, and between the one closest to the base of the nipple and the first of the larger annular ridges itself is situated another smaller one with the purpose of improving the compression factor of the plastic material housed between them.

The exact position of the three annular ridges is of great importance in the context of the invention, as it has been proved that they achieve optimisation as regards the leak-tightness function of the assembly. This positioning is also related with the position of the annular bands of the crimping claw or crimper, as will be explained later.

The appropriate entry of the crimper against the outer bushing also has an effect in this particular case. For this, the projection or outer edge of the bushing and the protruding portion of the sealing gasket and housing that control the said entry in a precise manner are used, with both teeth of the crimper positioning device therefore being used.

In order to ensure the anchoring between the gasket and the bushing, the protruding portion of the gasket has a projection that in turn fits into a corresponding recess or notch cut in the outer surface of the said bushing.

In this way, the jaw of the crimper is perfectly guided against the bushing, establishing a relationship between the planes of action of the crimping bands of the said crimper and the continent planes of the annular ridges of the nipple.

Moreover, on the nipple and between the group of the three larger annular ridges and the free end, three teeth are made, which put pressure on the pipe when the crimper is operated, forming three chambers, also annular, of which the most outer one is of a larger material size, so that it noticeably improves the axis-traction results of the pipe when once assembled, by allowing the lodging of a greater amount of plastic material in the last chamber.

As stated previously, the provision of the three larger annular ridges considerably increases the leak-tightness capacity of the assembly.

The provision of the two smaller annular ridges increases the compression factor of the material, which enters into the intermediate spaces in a more compressed manner, thus contributing to the previously mentioned leak-tightness.

The annular ridges in turn have been specially designed in order to facilitate the insertion of the pipe (whether this is multi-layer, PEX or PB) and are oversized in order to increase the safety factor of the assembly, while also permitting the set of tolerances of each specific manufacturer, within the manufacturing standards in force in the EU to be absorbed.

On the other hand, the making of the annular recess for the most inner portion of the gasket also contributes towards achieving a better general leak-tightness.

All these and other details of the invention are shown in the accompanying sheet of drawings, where they are presented as follows:
- Figure 1 is a half cross section view that shows the conventional action of the jaw of a radial type crimper on the stainless steel bushing that holds in its interior the pipe and the corresponding nipple.
- Figure 2 is a half cross section view of the assembly, in accordance with the invention, with its components.

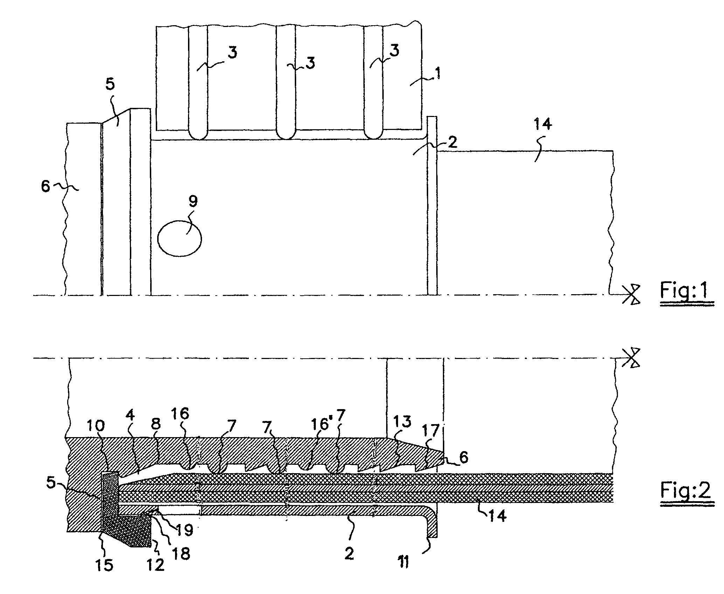

In accordance with Fig. 1, we can appreciate the position of the conventional crimper or press (1), provided with the three classic crimping bands (3), which approaches and crimps or presses the stainless steel bushing (2) in order to fix the pipe (14) between the said bushing and the nipple (6) which is clasped by the said pipe.

In accordance with Fig. 2, the invention shows the pipe (14) received between the nipple (6) and the stainless steel bushing (2) until it comes up against the base of the said nipple.

The exterior of this nipple (6) has the three equally protruding annular ridges (7) and between them is a tooth, not numbered, as well as another annular ring of a smaller diameter (16').

Towards the left, according to the position shown in this Fig. 2, we can appreciate the other annular ring of a smaller diameter (16), followed by a chamber (8) with sufficient space for material to be lodged while at the same time preventing the possible contact of the internal layer of aluminium with the brass of the nipple due to the effect of the crimping operation on the pipe, thus preventing possible later electrogalvanic corrosion phenomena in the presence of a moist atmosphere. This means that it facilitates the insertion of the pipe (14), while at all times preventing contact between the different component materials and thus preventing corrosion problems by galvanic couple between them.

At the base of the nipple (6) there is an annular recess by way of a slot (10) in which the most inner end of the sealing gasket is lodged, as can be appreciated. This gasket (5) continues in its geometric shape with a portion (15) which is supported on the base of the projection, and another portion protruding to the exterior (12) which has an angular projection (18) housed in a recess (19) in the bushing (2).

Although the anchoring of the base or slot of the nipple (10) in the plastic joint is maintained and is specific of the present invention, the outer shape of the sealing gasket itself and the positioning will be the object of different morphologies depending on the qualities of the stainless steel which we are using at the time of manufacturing the bushing, as well as on the system of positioning which is applied in the commercial crimpers used.

This arrangement of the gasket (5) with its housing slot (10), avoids additional machining of the wall (15) that makes contact with the gasket, and the body of the nipple achieves optimum insulating functionality between the three metals that make up the assembly - the stainless steel of the bushing (2), the brass of the nipple (6) and the aluminium of the multi-layer pipe (14). Moreover, it makes the three items form one single part, with the resulting advantages that this means at elastic level and in assembly process features.

Between the protruding portion (12) of the gasket and the edge (18) of the bushing (2), a space is provided with a certain adjustment for the optimisation of the centring for the gripping area for the bands (3) of the crimper (1) so that the operation of the system, once crimped is optimum.

The inner end (4) of the pipe (14) is also bevelled or tapered in order to facilitate its entry between the nipple (6) and the bushing (2). This has been achieved with a special tool, which at the same time has also performed the functions of a gauge and has been inserted inside the pipe.

This insertion of the pipe is also facilitated by the special morphology of the annular ridges (7), which minimise the tangent that it forms with the pipe in the insertion phase and, therefore, the friction surface.

The two smaller ridges (16, 16') on the nipple (6) can also be observed here, with their location in relation to the larger ridges, as well as the other teeth, in particular the three teeth (17) at the end of the projection (6), that form the corresponding annular chambers against the pipe, with the most exterior (13) of these being larger than the others and being precisely where the action of one of the crimping bands of the crimper (1) is applied.

In these two Figures, 1 and 2, we can also observe the device (9) for optic control of the correct insertion of the pipe inside the fitting, which has been optimised through the housing of the gasket (5). This means that if there is no prior cutting of the pipe perpendicular to its axis, and given that the three small optic control holes are separated by 120°, one of them would reveal a gap which is at the same time a penetration area for dirt and external moisture, if a larger area (8) had not been provided for this purpose, which allows the pipe to be left with sufficient tolerance to prevent this problem.

Moreover, the metallic character of the annular ridges (7) in comparison with the state of the current technique, which uses rubber gaskets (EPDM, etc.) for this purpose, and their location on the nipple itself, removes the need for this nipple to be machined with special slots that permit the housing of these rubber gaskets. These slots affect the robustness of the fitting and cause it to be weakened by reducing the thickness of the wall that separates the gasket from the interior of the fitting where the water passes.

As the present invention does not have this problem, we can in turn play with a configuration of the total thickness of the wall of the fitting which is both thinner and stronger, which means that we gain space in the interior of the pipe, so that losses in load are reduced and the liquid can flow through a surface with a greater passage.

## Claims

1. Pipe connection system, in particular for multi-layer pipes with an aluminium core and/or thermoplastic pipes of cross-linked polyethylene and polybutylene, that comprises a pipe (14) and several elements to be connected to it: a nipple (6), a housing gasket (5) and a bushing (2), where the nipple (6), who receives the pipe (14) on its exterior, protrudes from a base (15) that acts as a support face for the end of the said pipe, where the bushing (2) embraces the pipe (14) and makes contact with an internal plastic gasket (5) that is received in the base (15) of the nipple (6), where the bushing (2) has an outer edge (11) in a plane perpendicular to the axis of the assembly, where the bushing (2) is connected to the pipe (14) and to the nipple (6) by the action of a radial type crimper or press (1), equipped with three protruding crimping bands (3), that put pressure on the said bushing, and where the outer surface of the nipple (6) is provided with slots in which sealing rings and/or other items are included, being this pipe connection system **characterised by**:
- the outer surface of the nipple (6) being provided with three rounded annular projections (7) that form part of the body of the nipple, which protrude more from the said outer surface than any other surface portion, in that these projections (7) occupy an approximately central position on the nipple and protrude at an equal height to each other, with the position of the projections being directly linked with that of the crimping bands (3) and forming two leak-tightness areas corresponding to the position of two of the rings,
- a portion between the said annular projections (7) and the base (15) of the protruding nipple (6) with a cavity (8),
- another portion or slot (10) made in a radial direction at the base (15) of the nipple (6) for the insertion of one end of the sealing gasket (5), which will be fitted onto this base (15) and protrude to the exterior through an outer portion (12) of the said gasket (5),
- two rounded annular projections (16, 16'), lower in height than the previously mentioned more protruding annular projections (7), and arranged, one of them (16) between the cavity (8) and the nearest larger projection (7) and the other (16') between the other two larger projections (7),
- an end portion of the nipple (6) provided with three teeth, which form internal chambers, of which the closest tooth (17) to the free end of the nipple is greater in size than the other two, forming a chamber specially designed for tensile strength and positioned so as to coincide with the third of the bands (3) of the crimper (1),
- the relative position of the three larger annular projections (7), as well as of the three saw-like teeth mentioned, is determined by the exact centring of the crimper between the outer edge (11) of the bushing and the outer portion (12) of the sealing gasket, respectively,
- the outer portion (12) of the sealing gasket (5) makes contact with the bushing and has an angular projection on the side towards the outer surface of the said bushing (2) which is housed in a recess (19) on the exterior of the said bushing, while at the same time providing a wall that protrudes parallel to the edge (11) of the bushing (2).

2. Pipe connection system, in accordance with claim 1, **characterised in that** the inner end of the pipe (14) is supported against the inner section of the sealing gasket (5) and is provided with an annular taper (4) on the side toward the nipple (6)

3. Pipe connection system, in accordance with claim 1, **characterised in that** in the space provided between the edge (11) of the bushing and the wall (12) of the sealing gasket (5), there is space, although relatively tight-fitting, for the insertion of the radial crimper or press (1).

4. Pipe connection system, in accordance with claim 1, **characterised in that** the thickness of the wall of the inner section of the sealing gasket is lower than 1 millimeter.

## Patentansprüche

1. Rohrverbindungssystem, insbesondere für mehrschichtige Rohre mit einem Aluminiumkem und/oder thermoplastische Rohre aus vernetztem Polyäthylen und Polybutylen, das ein Rohr (14) und mehrere Elemente umfasst, die damit verbunden werden sollen: ein Anschlussstück (6), eine Gehäusedichtung (5) und eine Buchse (2), wobei das Anschlussstück (6), welches das Rohr (14) auf seiner Außenseite aufnimmt, aus einer Unterlage (15) herausragt, die als Stützfläche für das Ende des besagten Rohrs dient, wobei die Buchse (2) das Rohr (14) umklammert und Kontakt mit einem inneren Plastikdichtung (5) hat, die auf der Unterlage (15) des Anschlussstücks (6) aufgenommen wird, wobei die Buchse (2) eine Außenkante (11 ) in senkrechter Ebene zur Achse der Baugruppe hat, wo die Buchse (2) mit dem Rohr (14) und mit dem Anschlussstück (6) verbunden ist, und zwar durch die Wirkung einer Bördelpresse oder Presse (1) radialen Typs, der mit drei vorspringenden Bördelverbindungen (3) versehen ist, die Druck auf besagten Buchse ausüben, wobei die Außenoberfläche des Anschlussstücks (6) mit Kerben versehen ist, die in die Dichtungsringe und/oder sonstige Elemente eingefügt werden, wobei dieses Rohrverbindungssystem durch Folgendes gekennzeichnet ist:
- die Außenoberfläche des Anschlussstück (6) ist mit drei abgerundeten ringförmigen Projektionen (7) ausgestattet, die Teil des Gehäuses des Anschlussstück sind, der mehr aus besagter Außenoberfläche herausragt, als alle anderen Abschnitte der Oberfläche, indem diese Projektionen (7) eine annähernd zentrale Position auf dem Anschlussstück einnehmen und auf gleicher Höhe zueinander herausragen, wobei die Position der Projektionen direkt mit derjenigen der Bördelverbindungen (3) verbunden ist und zwei abgedichtete Flächen bildet, die der Position von zweien der Ringe entspricht,
- ein Abschnitt zwischen besagten ringförmigen Projektionen (7) und der Unterlage (15) des vorspringenden Anschlussstücks (6) mit einer Aushöhlung (8),
- ein weiterer Abschnitt oder eine Kerbe (10), die in radialer Richtung auf der Unterlage (15) des Anschlussstück (6) gemacht wird, zum Einfügen eines der Enden der Dichtungsmanschette (5), die auf diese Unterlage (15) befestigt wird und nach außen durch einen äußeren Abschnitt (12) der besagten Dichtungsmanschette (5) herausragt,
- zwei gerundete ringförmige Projektionen (16, 16'), geringer in der Höhe als die oben erwähnten, eher hervorstehenden ringförmigen Projektionen (7), davon eine (16) zwischen der Aushöhlung (8) und der nächst größeren Projektion (7) und die andere (16') zwischen den anderen beiden größeren Projektionen (7) angeordnet,
- ein Schlussabschnit des Anschlussstücks (6), mit drei Zähnen versehen, welche innere Kammern bilden, von denen der dem freien Ende des Anschlussstück am nächsten gelegene Zahn (17) größer ist als die anderen beiden, und eine Kammer bildet, die speziell auf Zugfestigkeit geprüft ist und so positioniert ist, dass sie mit der dritten der Verbindungen (3) der Bördelpresse übereinstimmt,
- die relative Position der drei größeren ringförmige Projektionen (7), sowie der drei erwähnten sägeförmigen Zähne, wird durch das exakte Zentrieren der Bördelpresse zwischen den Außenkanten (11) des Buchse bzw. dem äußeren Abschnitt (12) der Dichtungsmanschette bestimmt,
- der äußere Abschnitt (12) der Dichtungsmanschette (5) hat Kontakt mit dem Buchse und hat eine winkelförmige Projektion auf der zur Außenoberfläche hin gerichteten Seite besagter Buchse (2), die in einer Vertiefung (19) auf der Außernseite besagter Buchse untergebracht ist, während sie gleichzeitig für eine Wand sorgt, die parallel zur Kante (11) der Buchse (2) herausragt.

2. Rohrverbindungssystem, in Übereinstimmung mit Anspruch 1, **dadurch gekennzeichnet, dass** das innere.Ende des Rohrs (14) gegen den inneren Abschnitt der Dichtungsmanschette (5) gestützt wird und mit einer ringförmigen Abschrägung (4) auf der Seite zum Anschlussstück (6) hin versehen ist

3. Rohrverbindungssystem, in Übereinstimmung mit Anspruch 1, **dadurch gekennzeichnet, dass** es in dem verfügbaren Raum zwischen der Kante (11) der Buchse und der Wand (12) der Dichtungsmanschette. (5) Platz gibt, wenn auch relativ eng abliegend, für das Einfügen der radialen Bördelpresse oder Presse (1).

4. Rohrverbindungssystem, in Übereinstimmung mit Anspruch 1, **dadurch gekennzeichnet, dass** die Dicke der Wand des inneren Abschnitts der Dichtungsmanschette weniger als 1 Millimeter beträgt.

## Revendications

1. Système de raccord de tuyau, en particulier pour les tuyaux à plusieurs couches et/ou les tuyaux thermoplastiques en polyéthylène réticulé et polybuthylène, qui comprend un tuyau (14) et plusieurs pièces raccordées à ce tuyau : un mamelon (6), un joint d'étanchéité (5), une bague (2), où le mamelon (6) qui accueille le tuyau (14) sur sa face extérieure ressort d'une base (15) qui agit comme face de support pour l'extrémité du tuyau décrit, où la bague (2) entoure le tuyau (14) et touche un joint d'étanchéité interne en plastique (5) qui est logé sur la base (15) du mamelon (6), où la bague (2) a un bord extérieur (11) sur un plan perpendiculaire à l'axe de l'ensemble, où la bague (2) est reliée au tuyau (14), et au mamelon (6) par l'action d'un sertisseur ou d'une presse (1) équipée de trois bandes de sertissage en protrusion (3) qui appliquent de la pression sur cette bague (2), et où la surface extérieure du mamelon (6) est muni de deux encoches dans lesquelles les joints d'étanchéité et où les autres éléments sont compris, le système de raccord du tuyau est **caractérisé par le fait que** :
- La surface extérieure du mamelon (6) est munie de trois projections annulaires arrondies (7) qui font partie du corps du mamelon (6), qui dépasse plus de la surface extérieure décrite que toute autre partie de surface, dans lequel ces projections (7) occupent approximativement une position centrale sur le raccord et dépassent d'une hauteur égale l'une de l'autre, la position des projections étant directement liée à celle des bandes de sertissage (3) et formant deux zones d'étanchéité correspondant à la position des deux bagues,
- Une portion entre ces projections annulaires (7) et la base du mamelon (6) sortant (6) avec une cavité.
- Une autre portion ou encoche (10) faite dans une direction radiale à la base (15) du mamelon (6) (6) pour l'insertion d'une extrémité du joint d'étanchéité qui sera installé sur cette base (15) et ressort vers l'extérieur par une partie extérieure (12) du joint d'étanchéité (5),
- Deux projections annulaires arrondies (16, 16') moins hautes que les projections annulaires (7) indiquées précédemment et disposées de telle sorte que l'une d'entre elles (16) soit placée entre la cavité (8) et la projection la plus grande immédiatement suivante (7) et l'autre (16') entre les deux autres projections plus grandes (7),
- Une extrémité du mamelon (6) munie de trois dents, qui forment des chambres internes, desquelles la dent la plus proche (17) de l'extrémité libre du mamelon (6) est plus grande que les deux autres, et forme une chambre spécialement conçue pour la force de tension et placée de telle sorte qu'elle coïncide avec la troisième des bandes (3) de sertissage.
- La position relative des trois projections annulaires plus grandes (7) ainsi que l'une des trois dents indiquées est déterminée par le centrage exact de la sertisseuse entre le bord extérieur (11) de la bague (2) et la portion extérieure (12) du joint d'étanchéité, respectivement,
- La portion extérieure (12) du joint d'étanchéité (5) est en contact avec la bague (2) et a une projection angulaire sur la face vers la surface extérieure de cette bague (2), qui est logée dans une gorge (19) sur l'extérieur de cette bague (2), et forme en même temps une paroi qui ressort parallèlement au bord (11) de la bague (2).

2. Système de raccord de tuyau, conformément à la revendication 1, **caractérisé par le fait que** l'extrémité intérieure du tuyau (14) repose sur la section intérieure du joint d'étanchéité (5) et est muni d'un cône annulaire (4) sur le côté tourné vers le mamelon (6).

3. Système de raccord de tuyau, conformément à la revendication 1, **caractérisé par le fait que** dans l'espace laissé entre le bord (11) de la bague et la paroi (12) du joint d'étanchéité (5) il y a un espace un peu étroit pour insérer une sertisseuse ou une presse radiale (1).

4. Système de raccord de tuyau, conformément à la revendication 1, **caractérisé par le fait que** l'épaisseur de la paroi de la section intérieure du joint d'étanchéité est plus basse d'un millimètre.
